# EUROPEAN PATENT SPECIFICATION

(11) **EP 3 932 697 B1**
(45) Date of publication and mention of the grant of the patent: **23.11.2022**
(21) Application number: 21164796.1
(22) Date of filing: 25.03.2021
(51) Int. Cl.: B60C 27/06, B60C 27/08

(54) **AN ANTI-SKID DEVICE FOR A WHEEL**
ANTISCHLUPFVORRICHTUNG FÜR EIN RAD
DISPOSITIF ANTI-DÉRAPAGE POUR ROUES

(30) Priority: 29.06.2020 IT 202000015658
(43) Date of publication of application: 05.01.2022
(73) Proprietor: Lampa S.p.A., 46019 Viadana (MN) (IT)
(72) Inventor: MARUTTI, Paolo, 46019 VIADANA (MN) (IT)
(74) Representative: Monelli, Alberto

(56) References cited:
- EP-A1- 2 206 616
- WO-A1-2008/029424
- GB-A- 368 398
- US-A- 2 103 437
- US-A1- 2011 220 262
- US-B1- 9 409 456

## Description

The present invention relates to an anti-skid device for a vehicle wheel, typically a "spider chain" system.

In the technical language the expression "spider chain" is well-known and comprises a central fastening system to the wheel rim and peripheral elements which are superposed on the tyre tread to carry out an anti-skid action.

Spider chains are known in which there are supports for two flanked chain portions present on the tread. The two portions are constrained to a support by means of a corresponding bracket bent in a U-shape. Therefore two brackets are used (one for each chain portion). The brackets are applied to opposite axial ends of the support, with an axial direction that is understood to be the rotation direction of the wheel.

The support protrudes transversally to the circumferential extension of the tread. It comprises a plurality of studs that protrude out of the support to enable an anti-skid action (improving adherence on snow or ice). These studs are separated from one another and distributed on a surface of the support facing towards the road surface.

One drawback of this solution is linked to the fact that the studs are additional components which have to be singly applied and the application requires extra time. Further, during functioning they might be subjected to displacements (in particular to rotations) under the weight of the vehicle that might compromise the best functioning thereof; but especially, they might detach.

Anti-skid devices are also disclosed by US9409456, US2011/220262, GB368398, US21 03437, wherein US9409456 is showing the features of the preamble of claim 1.

In this context, the technical task underpinning the present invention is to provide an anti-skid device for a vehicle wheel that enables accelerating the industrial manufacturing thereof by optimising the number and cost of the components while at the same time improving the anti-skid efficiency.

The technical task set and the objects specified are substantially attained by an anti-skid device, comprising the technical characteristics as set out in one or more of the accompanying claims.

Further characteristics and advantages of the present invention will become more apparent from the following indicative, and hence nonlimiting, description of a preferred, but not exclusive, embodiment of an anti-skid device as illustrated in the appended drawings, in which:

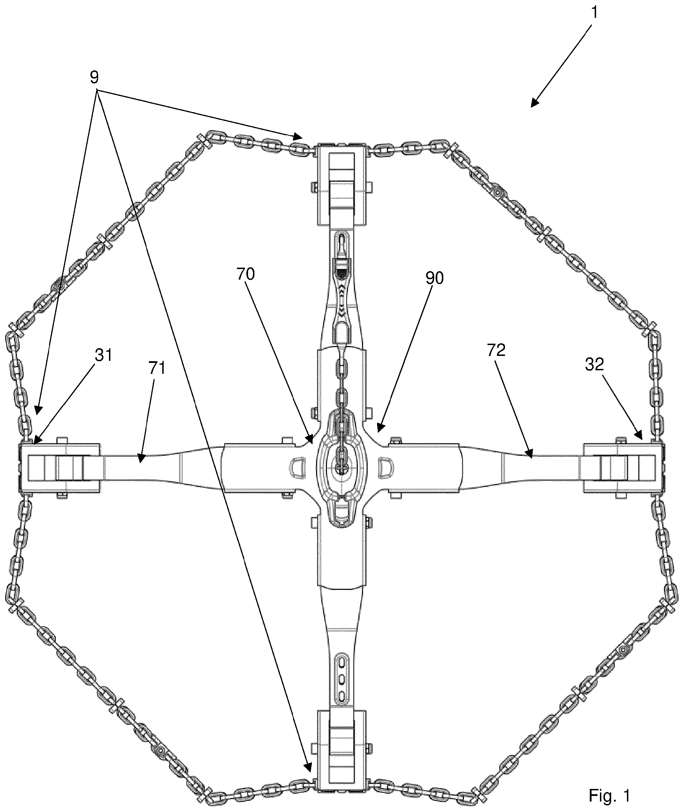

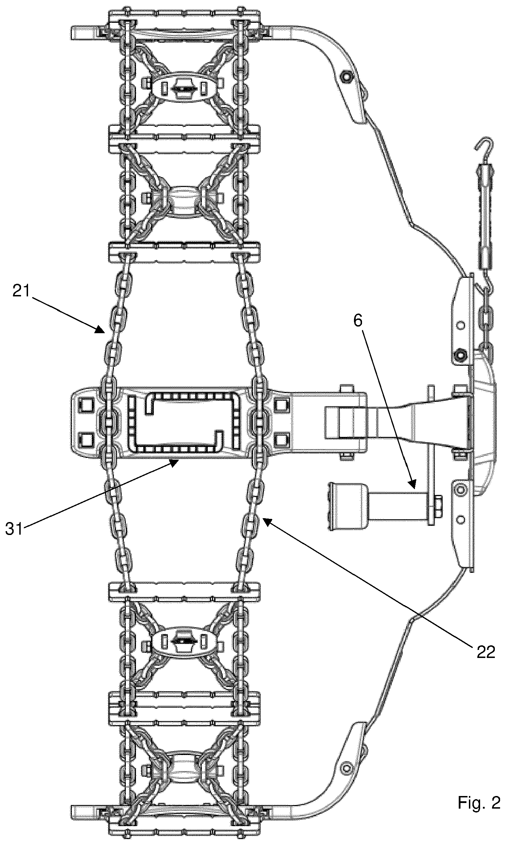

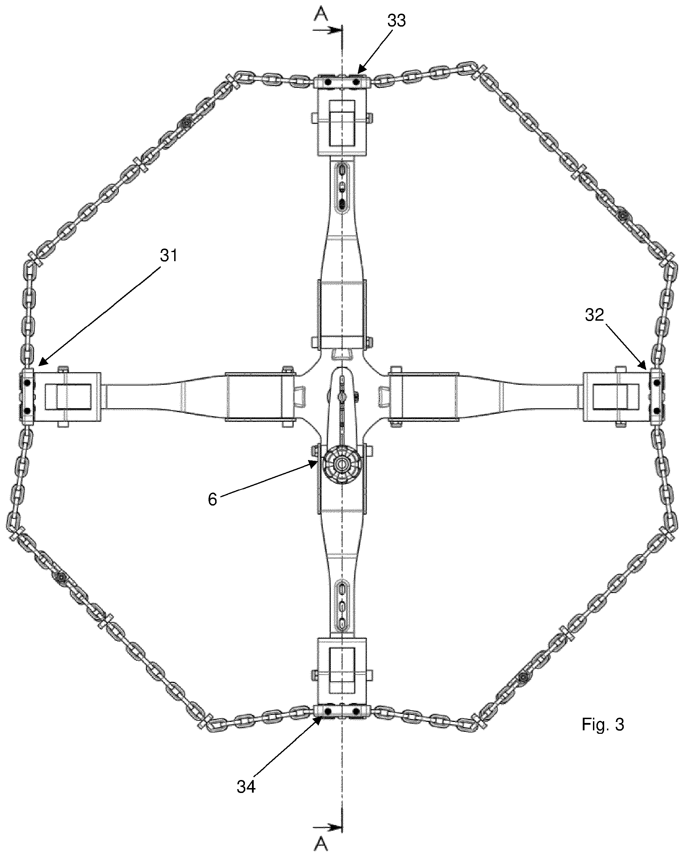

- figures 1, 2 and 3 are respectively a front, side and rear view of an anti-skid device according to the present invention;

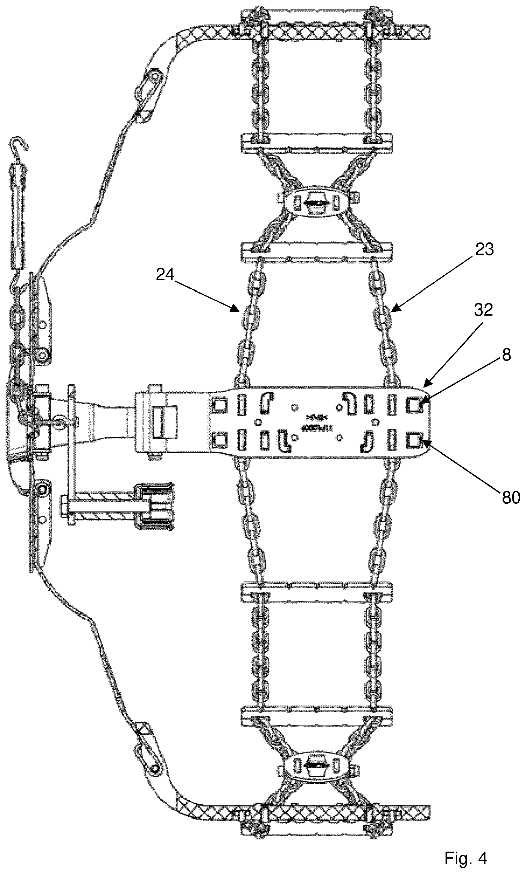

- figure 4 is a section view along plane A-A of figure 3;

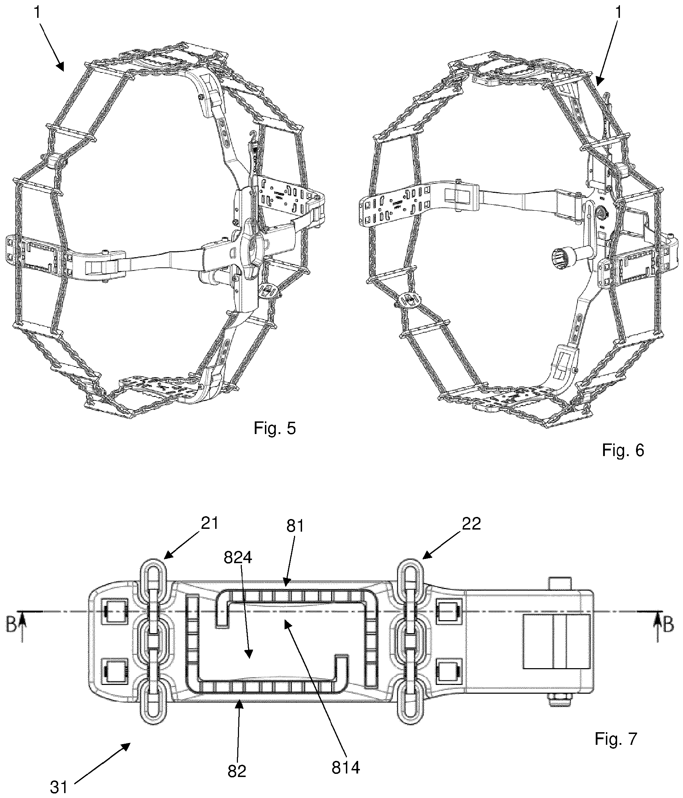

- figures 5 and 6 show two perspective views of an anti-skid device according to the present invention;
- figure 7 illustrates a detail of an anti-skid device according to the present invention;

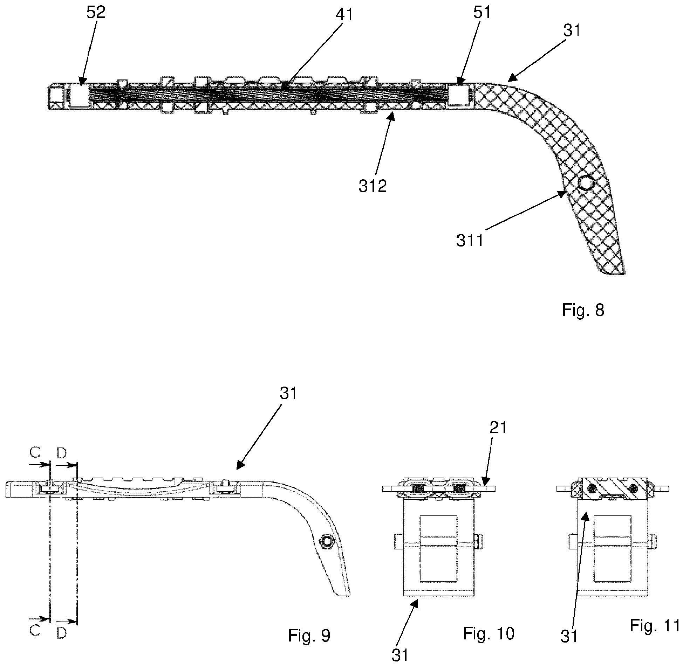

- figure 8 is a view according to section plane B-B of figure 7;
- figure 9 is a lateral view of the detail of figure 7;
- figures 10 and 11 are respectively views along planes C-C and D-D of figure 9;

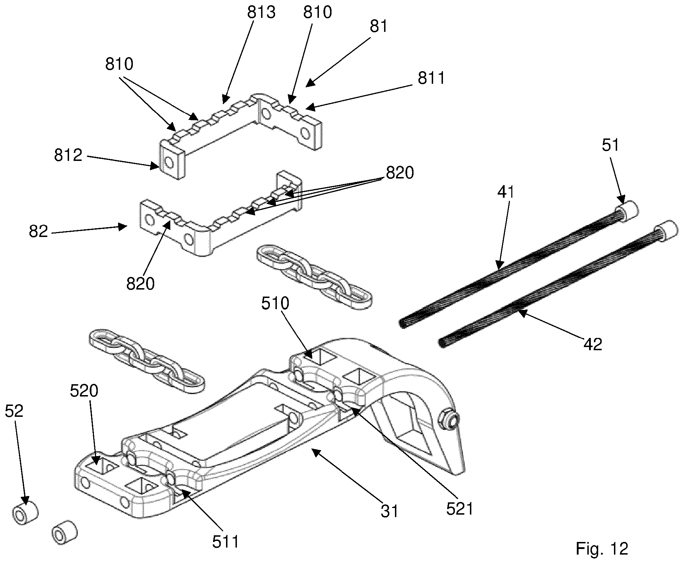

- figure 12 is an exploded view of the detail of figure 7;

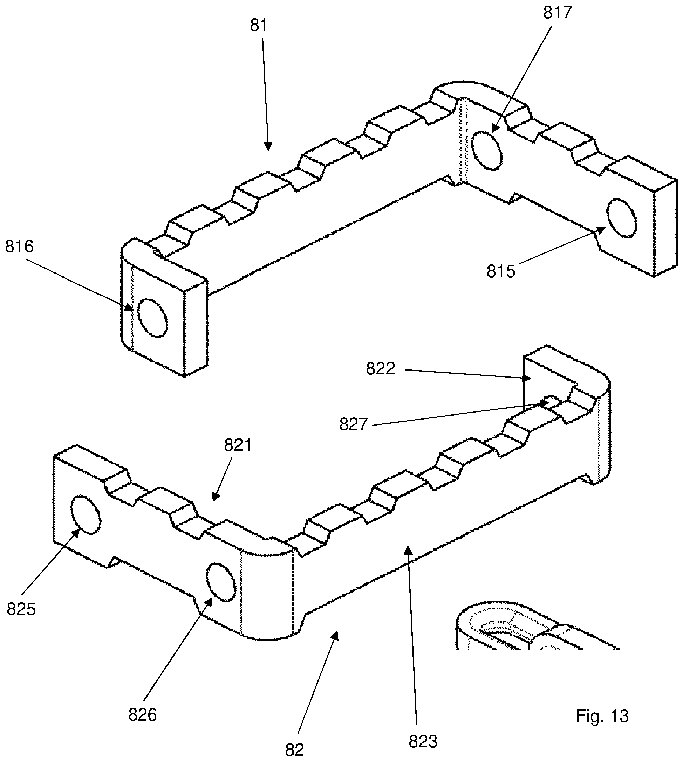

- figure 13 illustrates a detail in larger scale of figure 12.

In the accompanying drawings, reference numeral 1 indicates an anti-skid device for a wheel of a vehicle.

The anti-skid device 1 is advantageously of the "spider chain" type.

The device 1 comprises a first and a second portion 21, 22 of chain, flanked to one another and destined to extend along a development of a tread of the wheel. The first and the second portion 21, 22 are part of two separate chains. The first and the second portion 21, 22 might be parallel, or not. The first portion 21 is part of a first chain. The second portion 22 is part of a second chain. The first chain appropriately surrounds the tread by 360° without interruptions. The first chain thus surrounds the rotation axis of the wheel. It develops about the axis. The links of the first chain extend one following another without interruptions. All the links are therefore mutually connected without interruptions. The first chain is closed on itself. Likewise the second chain entirely surrounds the tread, appropriately without interruptions. The second chain is closed on itself.

The device 1 comprises a first support 31 of the first and the second portion 21, 22 of chain. The first support 31 is destined to at least partly superpose on a tread of the wheel (i.e. the tyre). The first support 31 is at least partly interposed between the first and the second portion 21, 22 of chain and the tread. The first support 31 comprises:
- a first portion 311 which extends from a radially more inner position to a radially more outer position; and
- a second portion 312 which is destined to surmount the tread.

The device 1 appropriately comprises at least a first connecting element 41 for connecting the first and the second portion 21, 22 of chain. The first connecting element 41 is located at the first support 31. The first connecting element 41 appropriately extends internally of the first support 31. The first connecting element 41 is at least partly incorporated in said first support 31. The first support 31 comprises at least a channel (typically having transversal sections with a closed perimeter) which runs along it transversally to the first and the second portion 21, 22 of chain and houses the first connecting element 41.

The first connecting element 41 is advantageously flexible. The first connecting element 41 is appropriately a longitudinal element, typically straight. It is for example a flexible bar. The bar can be flexed and elastically return into the original position. The bar appropriately has a section that is perpendicular to the prevalent extension direction having an area comprised between 0.28 cm² and 1.13 cm² (or having a radius comprised between 0.3 and 0.6 centimetres). The first connecting element 41 is preferably made of a metal material. For example they might comprise a plurality of (typically) interwoven metal wires. The above-mentioned flexible cable can in fact comprise a plurality of strands (preferably more than 10, advantageously 19) woven to one another. In this way resistance to fatigue is optimised.

The first connecting element 41 crosses a link of the first portion 21 of chain and a link of the second portion 22 of chain. The first and the second portion 21, 22 of chain comprise a succession of annular links, linked to one another.

The first connecting element 41 is appropriately confined in the thickness of the first support 31. The first connecting element 41, for at least 75% of the longitudinal extension thereof, is appropriately concealed inside the first support 31 (in an operating configuration in which the first support 31 and first connecting element 41 are assembled).

The device 1 comprises a first and a second abutment 51, 52 which retain the first connecting element 41 in position. The first and the second abutment 51, 52 are located at two ends of said first connecting element 41. The first abutment 51 is appropriately constrained to or incorporated in a single body with said first connecting element 41.

The second abutment 52 is appropriately constrainable (for example by interference or screwing) to the first connecting element 41. In this way the increase of the transversal section at the ends prevents the extraction of the first connecting element 41 from the first support 31.

The first and the second abutment 51, 52 are applied to the first connecting element 41 outside a zone interposed between the first and the second portion 21, 22 of chain.

The first support 31 appropriately defines a first and a second seat 510, 520 for housing respectively the first and the second abutment 51, 52. The first seat 510 appropriately defines a through-hole through the first support 31 and transversally delimited (surrounded) by the first support 31. Likewise the second seat 520 defines a through-hole through the first support 31 and transversally delimited (surrounded) by the first support 31. The first and the second seat 510, 520 cross the thickness of the first support 31.

The first support 31 defines a first housing 511 for the first portion 21 of chain and/or a second housing 521 for the second portion 22 of chain. The first housing 511 is preferably complementarily shaped with respect to the first portion 21 of chain. Therefore, a profile of the first portion 21 of chain is made in the first support 31. The second housing 521 is complementarily shaped with respect to the second portion 22 of chain. Therefore, a profile of the second portion 22 of chain is made in the first support 31. In the accommodating direction of the first and the second portion 21, 22 of chain, the first and second housing 511, 521 appropriately extend parallel to each other.

The first support 31 is preferably made of a plastic or elastomeric material. It is therefore flexible. As mentioned in the foregoing, the first flexible element 41 is made of a metal material.

The device 1 appropriately comprises a second connecting element 42 for connecting the first and the second portion 21, 22 of chain. The second connecting element 42 is flexible and flanked to the first connecting element 41 at the first support 31. One or more of the characteristics described with reference to the first connecting element 41 can appropriately be repeated for the second connecting element 42. In the preferred embodiment the second connecting element 42 is advantageously a flexible element.

The device 1 comprises a crown 9 along which the first support 31 is located and a central anchoring portion 90 (hub) to the wheel. The crown 9 is destined to superpose on the tread.

The device 1 comprises an anchoring structure 6 to a wheel, for example a fastening bolt of the wheel of the vehicle. The anchoring structure 6 is located at the central portion. The first support 31 is connected to said anchoring structure 6.

The device 1 comprises a second support 32 of a third and fourth portion 23, 24 of chain that are flanked to one another. The second support 32 is destined to superpose on the tread. The second support 32 is at least partly interposed between the tread and the third and fourth portion 23, 24 of chain. The first and third portion 21, 23 of chain are advantageously part of a same chain. Likewise, the second and fourth portion 22, 24 of chain are part of a same chain. The second support 32 is located along the crown 9 of the device 1. The first and the second support 31, 32 are appropriately in directly opposite positions. Along the crown 9, the device 1 appropriately comprises a third and a fourth support 33, 34 of corresponding pairs of portions of chain. The third and fourth support 33, 34 are appropriately diametrically opposite one another and are connected by a directrix which is rotated by 90° with respect to a directrix that connects the first and the second support 31, 32. What has been disclosed with reference to the first or second support 31, 32 can appropriately be repeated for the third and/or fourth support 33, 34.

The device 1 advantageously comprises at least a first flexible rod 8 for connecting the third and the fourth portion 23, 24 of chain. The first flexible rod 8 is located at the second support 32. The first flexible rod 8 appropriately extends inside the second support 32. The first flexible rod 8 is at least partly incorporated in the second support 32.

The first flexible rod 8 is made of a metal material. One or more of the characteristics described with reference to the first connecting element 41 can appropriately be repeated for the first flexible rod 8. The first flexible rod 8 is advantageously flanked by a second flexible rod 80 which connects the third and the fourth portion 23, 24 of chain at the second support 32. The first and/or the second rod 8, 80 can be made from a metal element having a prevalent longitudinal extension comprising a plurality of strands woven to one another.

One or more of the previously described features in relation to the first support 31 and the interaction thereof with the first and the second portion 21, 22 of chain can be repeated for the second support 32 and the interaction thereof with the third and fourth portion 23, 24 of chain.

The first support 31 comprises first anti-skid means 81 comprising a plurality of anti-skid teeth 810 which are part of a single piece (in a single monolithic body) and destined to carry out the action thereof on a road surface. Therefore two or more teeth are incorporated in a single body. In addition, the first support 31 might possibly comprise further teeth.

The first anti-skid means 81 comprise/are an insert partly incorporated in the first support 31. The first anti-skid means 81 are appropriately made of a metal material. The first anti-skid means 81 are inserted partly in the first support 31.

The first anti-skid means 81 comprise/are a bar.

The teeth, in a single body with one another, are appropriately flanked to one another along an extension direction of the bar.

Appropriately though not necessarily, the bar comprises a first arm 811, a second arm 812 and a connecting zone 813 of the first and the second arm 811, 812. The first arm 811, the second arm 812 and the connecting zone 813 define, in combination, a first concavity 814. Preferably but not necessarily, the first and the second arm 811, 812 are parallel to one another. They are preferably two straight portions. The connecting zone 813 appropriately comprises a straight portion perpendicular to the first and the second arm 811, 812.

The first arm 811 is appropriately longer than the second arm 812. The connecting zone 813 is appropriately longer than the first arm 811 and/or the second arm 812. The connecting zone 813 has a prevalent extension direction destined to be arranged parallel to the width of the tread (along a parallel direction to the direction of the rotation axis of the wheel).

The first anti-skid means 81 comprise at least four teeth 810 arranged in said connecting zone 813. At least one tooth, preferably two, is/are appropriately located along the first and/or the second arm 811, 812.

The second arm 812 comprises a first hole 816. The first connecting element 41 transits in the first hole 816.

The first arm 811 comprises a second hole 815 in which the second connecting element 42 transits. The passage of the first and second element 41, 42 respectively into the first and the second hole 816, 815 enables stabilising the system and preventing tilting.

The first arm 811 appropriately also comprises an additional hole 817 in which the first connecting element 41 transits. The first hole 816 and the additional hole 817 are coaxial.

The device 1 appropriately comprises second anti-skid means 82 incorporating in a single body a plurality of anti-skid teeth 820 destined to carry out the action thereof on a road surface. In other words the second anti-skid means 82 comprise a plurality of anti-skid teeth 820 being part of a single piece (in a single monolithic body). The second anti-skid means 82 extend along an extension line along which the anti-skid teeth 820 are arranged in succession.

The extension line of the second anti-skid means 82 defines a second concavity 824. The first and said second concavity 814, 824 are faced to one another. The second anti-skid means 82 preferably comprise a first and a second segment 821, 822 which extend transversally from an intermediate segment 823. The first and the second segment 821, 822 are appropriately parallel to one another. They are appropriately perpendicular to the intermediate segment 823.

The second anti-skid means 82 comprise at least two passage holes 825, 826 in which the first and the second connecting element 41, 42 respectively transit. The two passage holes 825, 826 are appropriately arranged along the first segment 821. One of said two holes 825 is appropriately coaxial to the first hole 816 and the other to the second hole 815. The second anti-skid means 82 appropriately comprise a further passage hole 827 in which the second connecting element 42 transits. The further passage hole 827 is made in the second segment 822.

More generally, the first and/or the second anti-skid means 81, 82 are crossed by the first and/or the second connecting element 41, 42.

The central anchoring portion connects to the first and second support 31, 32 respectively by means of a first and a second spoke 71, 72. The first and the second spoke 71, 72 appropriately extend substantially in a radial direction.

In fact the device 1 comprises a plurality of spokes 71, 72 which, at a radially more inner end, connect in a joining zone 70; one of said spokes 71, in a radially more outer position, is associated to said first support 31. The present invention achieves important advantages.

Primarily it enables a rapid and fast assembly linked to the fact that there is no application of single teeth to carry out the anti-skid action.

A further important advantage is linked to the fact that the teeth are constrained to at least one flexible bar 41, 42, enabling both flexibility and sturdiness.

The invention as it is conceived is susceptible to numerous modifications and variants, all falling within the scope of the invention according to the appended claims.

## Claims

1. An anti-skid device for a vehicle wheel comprising:
- a first and a second portion (21, 22) of chain, flanked to one another and destined to extend along an extension of a tread of the wheel;
- a first support (31) of the first and the second portion (21, 22) of chain, said first support (31) being destined to superpose on a tread;
said first support (31) comprising first anti-skid means (81) comprising a plurality of anti-skid teeth (810) being part of a single piece and destined to carry out the action thereof on a road surface;
**characterised in that** it comprises a plurality of spokes (71, 72) which at a radially more inner end connect in a reciprocal joining zone (70); one of said spokes (71), in a radially more outer position, being associated to said first support (31).

2. The device according to claim 1, **characterised in that** said first anti-skid means (81) comprise/are an insert partly incorporated in the first support (31).

3. The device according to claim 1 or 2, **characterised in that** said first anti-skid means (81) comprise/are a bar comprising a first arm (811), a second arm (812) and a connecting zone (813) of the first and the second arm (811, 812) which in combination define a first concavity (814); said device comprising a first connecting element (41) of the first and the second portion (21, 22) of chain; said first connecting element (41) being a bar located at the first support (31).

4. The device according to claim 3, **characterised in that** said second arm (812) comprises a first hole (816) in which said first connecting element (41) transits.

5. The device according to claim 3 or 4, **characterised in that** it comprises a second connecting element (42) of the first and the second portion (21, 22) of chain; said second connecting element (42) being a bar flanked to the first connecting element (41); said first arm (811) comprises a second hole (815) in which said second connecting element (42) transits.

6. The device according to any one of claims 3 to 5, **characterised in that** said first anti-skid means (81) comprise at least four teeth (810) arranged in said connecting zone (813).

7. The device according to any one of the preceding claims, **characterised in that** it comprises second anti-skid means (82) incorporating in a single body a plurality of anti-skid teeth (820) destined to carry out the action thereof on a road surface; said second anti-skid means (82) extending along an extension line along which the anti-skid teeth (820) are arranged in succession.

8. The device according to claim 7 when directly or indirectly dependent on claim 3, **characterised in that** said extension line defines a second concavity (824); said first and said second concavity (814, 824) being faced to one another.

9. The device according to claim 7 or 8, **characterised in that** said second anti-skid means (82) comprise at least two passage holes (825, 826) in which the first and the second connecting element (41, 42) respectively transit.

10. The device according to any one of the preceding claims, **characterised in that** the first portion (21) is part of a first chain; the first chain surrounding the rotation axis of the wheel.

## Patentansprüche

1. Antischlupfvorrichtung für ein Fahrzeugrad, umfassend:
- einen ersten und einen zweiten Kettenabschnitt (21, 22), nebeneinander angeordnet und dazu bestimmt, sich entlang einer Ausdehnung einer Lauffläche des Rads auszudehnen;
- eine erste Halterung (31) des ersten und des zweiten Kettenabschnitts (21, 22), wobei die erste Halterung (31) dazu bestimmt ist, eine Lauffläche zu überlagern,
wobei die erste Halterung (31) erste Antischlupfmittel (81) umfasst, umfassend eine Vielzahl von Antischlupfzähnen (810), die zu einem einzelnen Stück gehören und dazu bestimmt sind, ihre Wirkung auf eine Straßenoberfläche auszuüben,
**dadurch gekennzeichnet, dass** sie eine Vielzahl von Speichen (71, 72) umfasst, die sich an einem radial weiter innen liegenden Ende in einer gegenseitigen Zusammenfügungszone (70) verbinden, wobei eine der Speichen (71) in einer radial weiter außen liegenden Position mit der ersten Halterung (31) assoziiert ist.

2. Vorrichtung nach Anspruch 1, **dadurch gekennzeichnet, dass** die ersten Antischlupfmittel (81) die erste Halterung (31) umfassen/teilweise in diese integriert eingefügt sind.

3. Vorrichtung nach Anspruch 1 oder 2, **dadurch gekennzeichnet, dass** die ersten Antischlupfmittel (81) einen Stab umfassen/als Stab ausgebildet sind, umfassend einen ersten Arm (811), einen zweiten Arm (812) und eine Verbindungszone (813) des ersten und des zweiten Arms (811, 812), die in Kombination einen ersten Hohlraum (814) definieren, wobei die Vorrichtung ein erstes Verbindungselement (41) des ersten und zweiten Kettenabschnitts (21, 22) umfasst, wobei das erste Verbindungselement (41) als Stab ausgebildet ist, der sich an der ersten Halterung (31) befindet.

4. Vorrichtung nach Anspruch 3, **dadurch gekennzeichnet, dass** der zweite Arm (812) ein erstes Loch (816) umfasst, in dem das erste Verbindungselement (41) passiert.

5. Vorrichtung nach Anspruch 3 oder 4, **dadurch gekennzeichnet, dass** sie ein zweites Verbindungselement (42) des ersten und des zweiten Kettenabschnitts (21, 22) umfasst, wobei das zweite Verbindungselement (42) ein Stab ist, der neben dem ersten Verbindungselement (41) angeordnet ist, wobei der erste Arm (811) ein zweites Loch (815) umfasst, in dem das zweite Verbindungselement (42) passiert.

6. Vorrichtung nach einem der Ansprüche 3 bis 5, **dadurch gekennzeichnet, dass** die ersten Antischlupfmittel (81) mindestens vier Zähne (810) umfassen, die in der Verbindungszone (813) angeordnet sind.

7. Vorrichtung nach einem der vorhergehenden Ansprüche, **dadurch gekennzeichnet, dass** sie zweite Antischlupfmittel (82) umfasst, die in einem einzelnen Körper eine Vielzahl von Antischlupfzähnen (820) integrieren, die dazu bestimmt sind, ihre Wirkung auf eine Straßenoberfläche auszuüben, wobei sich die zweiten Antischlupfmittel (82) entlang einer Ausdehnungslinie ausdehnen, entlang derer die Antischlupfzähne (820) nacheinander angeordnet sind.

8. Vorrichtung nach Anspruch 7, wenn unmittelbar oder mittelbar von Anspruch 3 abhängig, **dadurch gekennzeichnet, dass** die Ausdehnungslinie einen zweiten Hohlraum (824) definiert, wobei der erste und der zweite Hohlraum (814, 824) einander zugewandt angeordnet sind.

9. Vorrichtung nach Anspruch 7 oder 8, **dadurch gekennzeichnet, dass** die zweiten Antischlupfmittel (82) mindestens zwei Durchgangslöcher (825, 826) umfassen, in denen jeweils das erste und das zweite Verbindungselement (41, 42) passieren.

10. Vorrichtung nach einem der vorhergehenden Ansprüche, **dadurch gekennzeichnet**, der erste Abschnitt (21) Teil einer ersten Kette ist, wobei die erste Kette die Rotationsachse des Rads umgibt.

## Revendications

1. Dispositif anti-dérapage pour une roue de véhicule, comprenant :
- une première et une deuxième partie (21, 22) de chaîne, flanquées l'une à l'autre et destinées à se prolonger le long d'une extension d'une bande de roulement de la roue ;
- un premier support (31) de la première et de la deuxième partie (21, 22) de la chaîne, ledit premier support (31) étant destiné à se superposer à une bande de roulement ;
ledit premier support (31) comprenant des premiers moyens anti-dérapage (81) comprenant une pluralité de dents anti-dérapage (810) faisant partie d'une seule pièce et destinées à exercer leur action sur une surface routière ;
**caractérisé en ce qu'**il comprend une pluralité de rayons (71, 72) qui, à une extrémité radialement plus interne, se raccordent dans une zone de jonction réciproque (70) ; l'un desdits rayons (71), dans une position radialement plus externe, étant associé audit premier support (31).

2. Dispositif selon la revendication 1, **caractérisé en ce que** lesdits premiers moyens anti-dérapage (81) comprennent/sont un insert partiellement incorporé dans le premier support (31).

3. Dispositif selon la revendication 1 ou 2, **caractérisé en ce que** lesdits premiers moyens anti-dérapage (81) comprennent/sont une barre comprenant un premier bras (811), un deuxième bras (812) et une zone de raccordement (813) du premier et du deuxième bras (811, 812) qui définissent en combinaison une première concavité (814) ; ledit dispositif comprenant un premier élément de raccordement (41) de la première et de la deuxième partie (21, 22) de la chaîne ; ledit premier élément de raccordement (41) étant une barre située en correspondance du premier support (31).

4. Dispositif selon la revendication 3, **caractérisé en ce que** ledit deuxième bras (812) comprend un premier trou (816) dans lequel transite ledit premier élément de raccordement (41).

5. Dispositif selon la revendication 3 ou 4, **caractérisé en ce qu'**il comprend un deuxième élément de raccordement (42) de la première et de la deuxième partie (21, 22) de la chaîne ; ledit deuxième élément de raccordement (42) étant une barre flanquée du premier élément de raccordement (41) ; ledit premier bras (811) comprend un deuxième trou (815) dans lequel transite ledit deuxième élément de raccordement (42).

6. Dispositif selon l'une quelconque des revendications 3 à 5, **caractérisé en ce que** lesdits premiers moyens anti-dérapage (81) comprennent au moins quatre dents (810) disposées dans ladite zone de raccordement (813).

7. Dispositif selon l'une quelconque des revendications précédentes, **caractérisé en ce qu'**il comprend des deuxièmes moyens anti-dérapage (82) incorporant dans un corps unique une pluralité de dents anti-dérapage (820) destinées à exercer leur action sur une surface routière ; lesdits deuxièmes moyens anti-dérapage (82) se prolongeant le long d'une ligne d'extension le long de laquelle les dents anti-dérapage (820) sont disposées en succession.

8. Dispositif selon la revendication 7, lorsqu'elle dépend directement ou indirectement de la revendication 3, **caractérisé en ce que** ladite ligne d'extension définit une deuxième concavité (824) ; ladite première et ladite deuxième concavité (814, 824) faisant face l'une à l'autre.

9. Dispositif selon la revendication 7 ou 8, **caractérisé en ce que** lesdits deuxièmes moyens anti-dérapage (82) comprennent au moins deux trous de passage (825, 826) dans lesquels transitent respectivement le premier et le deuxième élément de raccordement (41, 42).

10. Dispositif selon l'une quelconque des revendications précédentes, **caractérisé en ce que** la première partie (21) fait partie d'une première chaîne ; la première chaîne entourant l'axe de rotation de la roue.
